(19) Europäisches Patentamt
European Patent Office
Office européen des brevets

(11) Veröffentlichungsnummer: **0 023 954**
**A2**

(12) # EUROPÄISCHE PATENTANMELDUNG

(21) Anmeldenummer: **80103231.9**

(22) Anmeldetag: **11.06.80**

(51) Int. Cl.³: **B 64 C 11/00**
**B 64 C 27/32**

(30) Priorität: **10.08.79 DE 2932441**

(43) Veröffentlichungstag der Anmeldung:
**18.02.81 Patentblatt 81/7**

(84) Benannte Vertragsstaaten:
**FR GB IT**

(71) Anmelder: **Messerschmitt-Bölkow-Blohm Gesellschaft
mit beschränkter Haftung
Postfach 801109
D-8000 München 80(DE)**

(72) Erfinder: **Frommlet, Hubert, Dipl.-Ing.
Ahornring 65
D-8012 Siegertsbrunn(DE)**

(72) Erfinder: **Stangl, Ludwig, Dipl.-Ing.
Prof-Angermair-Ring 22
D-8046 Garching(DE)**

(54) Dämpfungseinrichtung für ein Rotorblatt.

(57) Bei diesem Rotorblatt (1) weist dessen die Blattwinkel-
-bewegungen zulassende Verbindung (Holmteilabschnitt 2.1)
mit der Rotornabe (4) in einem von einem blattwurzelseitigen
Blattsteuerhebelanschluß (6) bis zur Rotornabe (4) sich
erstreckenden Bereich ein wenigstens fiktives Gelenk (5) für
die Blattschwenkbewegungen auf.

Zwecks in Blattschwenkrichtung wirksamer Dämpfung
des Rotorblattes (1) stützt sich ein torsionsweicher und nur in
Blattschwenkrichtung biegesteifer Stab (8) einerseits an der
Rotornabe (4) und andererseits am Blattsteuerhebelanschluß
(6) bzw. an der Blattwurzel ab, wobei eine Abstützung über
eine im wesentlichen nur für Bewegungen des Stabes in der
Rotorebene elastisch nachgiebige Verbindung hoher Dämpfungsfähigkeit (Elastomerlagen 10) hergestellt ist.

EP 0 023 954 A2

./...

MESSERSCHMITT-BÖLKOW-BLOHM
GESELLSCHAFT
MIT BESCHRÄNKTER HAFTUNG,
MÜNCHEN

Ottobrunn, 26. Juli 1979
BT01 Hb/th

8564

Dämpfungseinrichtung für ein Rotorblatt

Die Erfindung betrifft eine Dämpfungseinrichtung für ein Rotorblatt gemäß dem Oberbegriff des Patentanspruchs 1.

Bei einem sogenannten schwenkweichen Rotor neigen bekanntlich die Rotorblätter beim Anfahren und Auslaufen des Rotors zu instabilen Schwingungen. Um nämlich beispielsweise die Rotorbetriebsdrehzahl zu erreichen, muß der Bereich der Rotordrehzahl durchfahren werden, in welchem die Rotordrehfrequenz mit der Blatteigenfrequenz in Blattschwenkrichtung übereinstimmt (Resonanz). In diesem kritischen Rotordrehzahlbereich kann es bei mangelnder Dämpfung der Blattschwenkbewegungen im Rotor selbst oder seiner Befestigungsstruktur zur Bodenresonanz mit der Folge von Zerstörungen nicht nur am Rotor, sondern auch an der Flugzeugzelle kommen.

Der Erfindung liegt daher die Aufgabe zugrunde, für das einzelne Rotorblatt insbesondere eines solchen schwenkweichen Rotors eine in Blattschwenkrichtung wirksame Dämpfungseinrichtung zu schaffen, ohne das betriebsnotwendige aeroelastische Verhalten des Rotors zu beeinträchtigen.

Diese Aufgabe ist bei einer Dämpfungseinrichtung für ein Rotorblatt der im Oberbegriff des Patentanspruchs 1 beschriebenen Art gemäß dessen Kennzeichen gelöst. Hiernach ist also ein Stab ein das zwischen der Rotornabe und dem Blattsteuerhebelanschluß liegende (fiktive oder auch mechanische) Blattgelenk überbrückendes Mittel, welches aufgrund seiner elastisch
nachgiebigen Verbindung (entweder mit der Rotornabe oder mit
dem Blattsteuerhebelanschluß) bei einer Schwenkbiegung der
Blattverbindung in Blattschwenkrichtung als Hebel wirkt,
dessen Relativbewegung dann gegenüber der Blattverbindung
zu einer Schubverformung jener elastisch nachgiebigen Verbindung führt. Hierbei ist der Stab als zweiarmiger Hebel
wirksam, dessen Drehachse die Blattschwenkachse ist, d.h.
für die Größe der Schubverformung bzw. Dämpfungskraft der
vorzugsweise mittels eines Elastomers hergestellten elastisch
nachgiebigen Verbindung ist im wesentlichen ihr Abstand von
der Blattschwenkachse maßgebend. Da dieser Abstand bei vorzugsweiser Ausbildung der nabenseitigen Abstützung des Stabes als die elastisch nachgiebige Verbindung zugunsten einer
höheren Schubverformung leicht änderbar ist, läßt sich auch
bei relativ geringen Schwenkbiegungen der Blattverbindung
ein hoher Dämpfungsgrad erreichen.

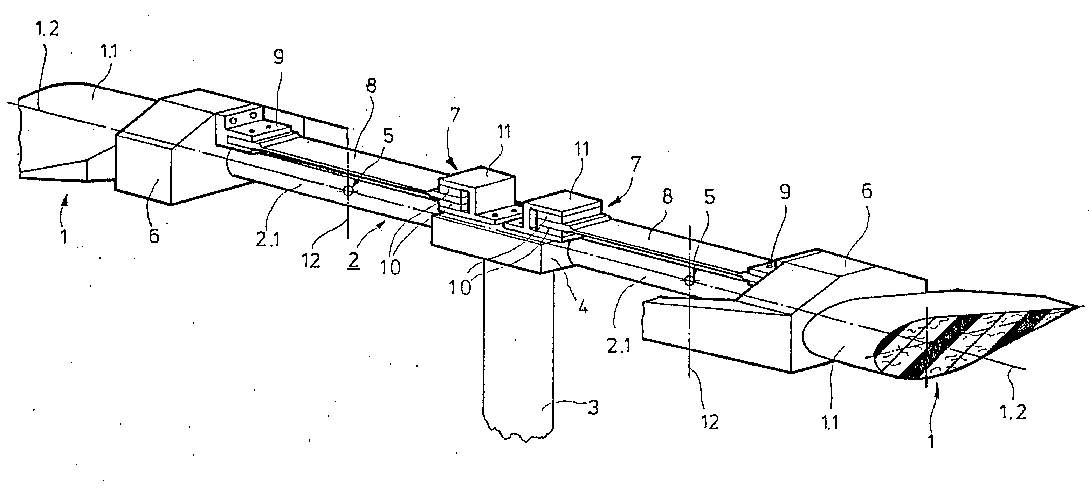

Weitere bemerkenswerte Einzelheiten hierzu werden im nachfolgenden Ausführungsbeispiel der Erfindung verdeutlicht,
wobei auch auf die in den Unteransprüchen gekennzeichneten
baulichen Weiterbildungen eingegangen wird. Hierzu zeigt
die Zeichnung in einer perspektivischen Ansicht einen Zweiblattrotor, der beispielsweise ein Heckrotor eines Drehflügelflugzeugs ist. Die beiden jeweils am Blattflügel 1.1 abgebrochen dargestellten Rotorblätter 1 können aus faserverstärktem Kunststoff mit in Blattlängsrichtung sich erstrekkenden Fasersträngen bestehen, die von der Blattspitze des
einen Rotorblattes zur Blattspitze des anderen Rotorblattes verlaufen und im Bereich zwischen den beiden Blattflügeln einen gemeinsamen einstückig durchgehenden Holmteil 2 bilden. Die Verbindung mit einer Rotorantriebswelle 3 ist über die z.B. als zentrale Fassung des Holmteils 2 ausgebildete Rotornabe 4 hergestellt. Bei einem derartigen - z.B. durch die DE-OS 27 01 519 bekannten - Rotorblattpaar ist der gemeinsame Holmteil 2 eine sowohl hinsichtlich der Blattwinkelbewegungen torsionsweiche als auch hinsichtlich der Blattschwenk- und Blattschlagbewegungen biegeweiche Verbindung der Rotorblätter 1 mit der Rotornabe 4. Für die Blattschwenk- und Blattschlagbewegungen bedarf es also keiner gesonderten mechanischen Gelenke: Der das einzelne Rotorblatt 1 bzw. seinen Blattflügel 1.1 mit der Rotornabe 4 jeweils verbindende Holmteilabschnitt 2.1 bildet ein entsprechendes fiktives Gelenk 5 für die Blattschwenkbewegungen an der durch einen Kreis dargestellten Stelle, während ein fiktives Gelenk für die Blattschlagbewegungen z.B. zwischen dem Blattschwenkgelenk 5 und der Rotornabe 4 denkbar ist. Natürlich ist es ebenso möglich, die beiden Rotorblätter 1 bzw. die beiden Holmteilabschnitte 2.1 voneinander zu trennen, also je Rotorblatt eine gesonderte torsions- und biegeweiche Verbindung mit der Rotornabe herzustellen. Stattdessen kann schließlich auch die Verbindung des einzelnen Rotorblattes 1 mit der Rotornabe 4 in konventioneller Weise über Blattwinkellager und gesonderte Schlag- und Schwenkgelenke hergestellt sein. Aber in allen genannten Ausführungsformen der Blattverbindung ist der Blattsteuerhebelanschluß 6 an der Blattwurzel bzw. an dem unmittelbar am Blattflügel 1.1 anschließenden Halsteil des Rotorblattes 1 derart festsitzend angeordnet, daß bei der Blattwinkelverstellung zwischen dem Blattsteuerhebelanschluß 6 und dem Blattflügel 1.1 kein Schlupf entsteht.

Um bei diesem Rotor mit einem wenigstens fiktiven Blattschwenkgelenk 5 in der Blattverbindung (Holmteilabschnitt 2.1) zwischen der Rotornabe 4 und dem jeweiligen Blattsteuerhebelanschluß 6 durch eine Schwenkdämpfung instabile Schwingungszustände des Rotors auszuschließen, ist je Rotorblatt 1 eine zwischen der Rotornabe 4 und dem Blattsteuerhebelanschluß 6 wirksame Dämpfungseinrichtung 7 vorgesehen. Diese besteht zum einen aus einem in Form einer Blattfeder ausgebildeten, also auch torsionsweichen Stab 8, welcher zur Rotorebene parallel liegend angeordnet und somit nur in Blattschwenkrichtung biegesteif ist. Der z.B. aus faserverstärktem Kunststoff bestehende Stab 8 erstreckt sich aus Gründen möglichst uneingeschränkter Blattschlag- und Blattwinkelbewegungen in geringstmöglichem (Millimeter-)Abstand gegenüber dem Holmteilabschnitt 2.1 und achsparallel zur Blatt-längsachse/ 1.2 Zum anderen ist dieser Stab 8 mit dem Blattsteuerhebelanschluß 6 starr und mit der Rotornabe 4 elastisch nachgiebig verbunden. Hierbei ist die starre Verbindung mittels eines mit dem Blattsteuerhebelanschluß 6 z.B. verschraubten Beschlags 9 hergestellt, während das Mittel der elastisch nachgiebigen Verbindung ein Elastomer ist, das in Form zweier z.B. aufvulkanisierter Lagen 10 an den breiten Stabflächen mit dem betreffenden Ende des Stabes 8 in einer nabenseitig z.B. verschraubten, gabelförmigen Fassung 11 sitzt. Diese Elastomerlagen 10, welche nötigenfalls mehrschichtig mit zwischengefügten Metallschichten ausgebildet sein können, sind nicht nur mit dem Stab 8, sondern auch mit der Fassung 11 (z.B. durch Vulkanisieren) stoffschlüssig verbunden; als Elastomer kommen beispiels-weise Silikone, Polyurethan oder Gummimischungen in Betracht. Die Konzeption der Dämpfungseinrichtung 7 mit nabenseitiger Anordnung der elastisch nachgiebigen Verbindung des Stabes 8 hat gegenüber der auch möglichen Anordnung dieser Verbindung bzw. der Elastomerlagen 10 am Blattsteuerhebelanschluß 6 den Vorteil einer geringeren Blattmasse und damit geringerer Festigkeitsprobleme z.B. bei der Blattverbindung.

Wie im übrigen aus der Zeichnung hervorgeht, ist der Stab 8 an seinen beiden Enden aufgedickt, also nur hier allseits biegesteif ausgebildet. Das hat für die elastisch nachgiebige Verbindung mit der Rotornabe 4 den Vorteil, daß bei den möglichen Bewegungen des Stabes 8 in den Elastomerlagen 10 ausschließlich Scherspannungen auftreten können. Was die Bewegungen des Stabes 8 betrifft, so kann er, da einerseits Kraft- und Momentenschluß mit der Blattwurzel (Blattsteuerhebelanschluß 6) bzw. mit dem Blattflügel 1.1 besteht und andererseits die Einspannung des Stabes 8 an der Rotornabe 4 praktisch nur in Blattlängs- und Blattschwenkrichtung nachgiebig ist, bei den Schwenkbewegungen des betreffenden Rotorblattes 1 nur Bewegungen in einer zur Rotorebene parallelen Ebene ausführen. Hierbei hat die Längsbeweglichkeit des Stabes 8 den Vorteil, daß er von den Blattfliehkräften freigehalten ist und somit daraus kein rückdrehendes Torsionsmoment resultieren kann. Bei seinen aufgrund der Elastomerlagen 10 in Blattschwenkrichtung möglichen Bewegungen des Stabes 8 wirkt er letztlich im Zusammenwirken mit diesen Elastomerlagen als die eingangs bereits beschriebene hochwirksame Schwenkdämpfung, welche Hebelkräfte zur Schubverformung des Dämpfungsmaterials ausnutzt. Je nach Kraftübersetzung, die hier bestimmt wird durch die Wahl des Abstandes der Elastomerlagen 10 von der Blattschwenkachse 12 (Hebeldrehachse), ist eine Gesamtsteifigkeit der Dämpfungseinrichtung 7 erreichbar, welche die Blattschwenkfrequenz nur unwesentlich beeinflußt.

Akte 8564

Letztlich bleibt noch zu bemerken, daß bei dem beschriebenen Rotorblatt 1 mit einem Blattholm aus in Blattlängsrichtung sich erstreckenden Fasersträngen durchaus der Stab 8 aus von diesen Fasersträngen abgezweigten Fasersträngen gebildet werden, er also sogar ein integraler Bestandteil des Rotorblattes 1 sein kann. Die erfindungsgemäße Dämpfungseinrichtung kann somit die Forderung nach geringstmöglichem baulichen Aufwand noch weitgehender erfüllen als im vorbeschriebenen Ausführungsbeispiel.

UO23954

MESSERSCHMITT-BÖLKOW-BLOHM
GESELLSCHAFT
MIT BESCHRÄNKTER HAFTUNG,
MÜNCHEN

Ottobrunn, 26. Juli 1979
BTO1 Hb/th

8564

Dämpfungseinrichtung für ein Rotorblatt

Patentansprüche

1. Dämpfungseinrichtung für ein an einer Rotornabe schwingungsfähiges Rotorblatt, wobei dessen die Blattwinkelbewegungen zulassende Verbindung mit der Rotornabe in einem von einem blattwurzelseitigen Blattsteuerhebelanschluß bis zur Rotornabe sich erstreckenden Bereich ein wenigstens fiktives Gelenk für die Blattschwenkbewegungen aufweist, dadurch g e - k e n n z e i c h n e t , daß ein torsionsweicher und nur in Blattschwenkrichtung biegesteifer Stab (8) sich einerseits an der Rotornabe (4) und andererseits am Blattsteuerhebelanschluß (6) bzw. an der Blattwurzel abstützt, wobei eine Abstützung über eine starre Verbindung (Beschlag 9) und die zweite Abstützung über eine im wesentlichen nur für Bewegungen des Stabes in der Rotorebene elastisch nachgiebige Verbindung hoher Dämpfungsfähigkeit (Elastomerlagen 10) hergestellt ist.

2. Dämpfungseinrichtung nach Anspruch 1, g e k e n n z e i c h - n e t durch eine achsparallele Anordnung des Stabes (8) zur Blattlängsachse (1.2).

3. Dämpfungseinrichtung nach Anspruch 1 oder 2, dadurch g e - k e n n z e i c h n e t , daß über die elastisch nachgiebige Verbindung hoher Dämpfungsfähigkeit (Elastomerlagen 10) die nabenseitige Abstützung des Stabes (8) hergestellt ist.

4. Dämpfungseinrichtung nach Anspruch 1 oder 3, dadurch g e - k e n n z e i c h n e t , daß ein Elastomer (10) das Mittel der elastisch nachgiebigen Verbindung hoher Dämpfungsfähigkeit ist.

5. Dämpfungseinrichtung nach Anspruch 1, 2 oder 3, dadurch g e k e n n z e i c h n e t , daß der Stab (8) in Form einer Blattfeder ausgebildet ist, die zur Rotorebene parallel liegend angeordnet ist.

6. Dämpfungseinrichtung nach Anspruch 4 und 5, dadurch g e - k e n n z e i c h n e t , daß die Blattfeder (Stab 8) an ihrem einen Ende wenigstens einseitig (der Breite nach) mit dem Elastomer (10) beschichtet ist.

7. Dämpfungseinrichtung nach Anspruch 6, dadurch g e k e n n - z e i c h n e t , daß die Blattfeder (Stab 8) wenigstens an ihrem elastomerbeschichteten Ende allseits biegesteif ausgebildet ist.

8. Dämpfungseinrichtung nach Anspruch 5 und 7, dadurch g e - k e n n z e i c h n e t , daß das elastomerbeschichtete En- de der Blattfeder (Stab 8) wenigstens beidseitig eine Lage des Elastomers (10) aufweist und mit den Elastomerlagen in einer gabelförmigen Fassung (11) sitzt.

9. Dämpfungseinrichtung nach Anspruch 8, dadurch  g e k e n n -
   z e i c h n e t , daß die Elastomerlagen (10) sowohl mit der
   Blattfeder (Stab 8) als auch mit der Fassung (11) stoffschlüssig verbunden sind.

10. Dämpfungseinrichtung nach einem oder mehreren der vorhergehenden Ansprüche bei einem Rotorblatt mit einem Blattholm aus in Blattlängsrichtung sich erstreckenden Faser-
    strängen, dadurch  g e k e n n z e i c h n e t , daß der
    Stab bzw. die Blattfeder aus vom Blattholm abgezweigten
    Fasersträngen gebildet ist.